# EUROPEAN PATENT APPLICATION

(11) **EP 4 657 112 A1**
(43) Date of publication of application: **03.12.2025**
(21) Application number: 25179922.7
(22) Date of filing: 30.05.2025
(51) Int. Cl.: G01S 7/4863, G01S 17/894, H04N 25/42, H04N 25/44, H04N 25/46, H04N 25/705, H04N 25/773

(54) **RECEIVING CHIP, METHOD FOR OUTPUTTING GRAYSCALE DATA, AND LIDAR APPARATUS**

(30) Priority: 31.05.2024 CN 202410707937
(71) Applicant: Suteng Innovation Technology Co., Ltd, Shenzhen City Guangdong 518000 (CN)
(72) Inventor: ZHAO, Yan, Shenzhen City (CN); WANG, Jiaxin, Shenzhen City (CN)
(74) Representative: Ran, Handong

(57) **Abstract**

The present application provides a receiving chip, a method for outputting grayscale data, and a LIDAR device. The receiving chip comprises a receiving array, a receiving driving module, and a signal processing module. The receiving array comprises multiple open receivers, each containing N receiving units with at least two control switches. The receiving driving module is configured to input a working voltage to mm receiving units (m<N) within each open receiver during each grayscale data acquisition process. The m receiving units are configured to receive ambient light under the working voltage and output a first sampled signal accumulated from the ambient light received by the mm units. The signal processing module processes the first sampled signal from each grayscale data acquisition process to obtain grayscale data, enabling the LIDAR apparatus to output high-resolution grayscale images.

## Description

### TECHNICAL FIELD

The present application relates to the field of LIDAR technology, and more specifically, to a receiving chip, a method for outputting grayscale data, and a LIDAR apparatus in the LIDAR field.

### TECHNICAL BACKGROUND

A Time-of-Flight (ToF) chip, also known as a receiving sensor chip, is used to implement Time-of-Flight technology. The receiving sensor chip calculates the distance to a target object by measuring the time difference between light emission from a transmitter and its reflection from the target to a receiver.

As ToF chips find increasingly broad applications, user demands for chip performance and resolution continue to rise. Consequently, improving the precision and capabilities of receiving chips has become an urgent challenge.

### SUMMARY

The present application provides a receiving chip, a method for outputting grayscale data, and a LIDAR apparatus capable of generating high-resolution grayscale images.

First Aspect: a receiving chip, comprising a receiving array, a receiving driving module and a signal processing module, wherein the receiving array comprises a plurality of open receivers, each of the open receivers comprises N receiving units, the N receiving units have at least two control switches, the N receiving units share a single output channel, and N is an integer greater than or equal to 2;

Wherein the receiving driving module is configured to input a working voltage to m receiving units in the open receiver in each grayscale data acquisition process, wherein m is a positive integer less than N;

Wherein the m receiving units in the open receiver are configured to receive ambient light under the working voltage and output a first sampled signal accumulated after the m receiving units receive the ambient light;

Wherein the signal processing module is configured to process the first sampled signal acquired by the open receiver in each grayscale data acquisition process to obtain grayscale data.

Second Aspect: A method for outputting grayscale data, applied to a receiving chip provided with open receivers, each open receiver including N receiving units having at least two control switches and sharing a single output channel, where N is an integer greater than or equal to 2, the method comprising:
in each grayscale data acquisition process, inputting a working voltage to m receiving units in the open receiver, m being a positive integer less than N;
controlling the m receiving units in each open receiver to receive ambient light under the working voltage and output a first sampled signal accumulated after the m receiving units receive the ambient light; and
processing the first sampled signal acquired by the open receiver during each grayscale data acquisition process to obtain grayscale data.

Third Aspect: A LIDAR apparatus comprising the receiving chip according to any one of the preceding aspects.

Fourth Aspect: A computer program product, comprising: computer program code, wherein when the computer program code is run on a computer, the computer is caused to execute the method for outputting grayscale data described in the preceding aspects.

Fifth Aspect: A computer-readable storage medium, storing computer program code, wherein when the computer program code is run on a computer, the computer is caused to execute the method for outputting grayscale data described in the preceding aspects.

One of the embodiments of the present application provides a receiving chip, wherein the receiving array of the receiving chip includes a plurality of open receivers, such that through switch control of receiving units in the open receiver, high-resolution grayscale image output is achieved; and the receiving components of the LIDAR itself can be reused, thereby obtaining grayscale images without incurring additional costs.

### BRIEF DESCRIPTION OF DRAWINGS

**FIG. 1** is a schematic structural diagram of a receiver in the prior art;
**FIG. 2** is a schematic structural diagram of a receiving chip according to an embodiment of the present application;
**FIG. 3** is a schematic diagram illustrating an activation distribution of receiving units according to an embodiment of the present application;
**FIG. 4** is a schematic diagram illustrating another activation distribution of receiving units according to an embodiment of the present application;
**FIG. 5** is a schematic diagram illustrating yet another activation distribution of receiving units according to an embodiment of the present application;
**FIG. 6** is a schematic diagram illustrating a further activation distribution of receiving units according to an embodiment of the present application;
**FIG. 7** is a schematic diagram illustrating an additional activation distribution of receiving units according to an embodiment of the present application;
**FIG. 8** is a schematic diagram illustrating still another activation distribution of receiving units according to an embodiment of the present application;
**FIG. 9** is a schematic diagram illustrating exposure timing in a point cloud mode according to an embodiment of the present application;
**FIG. 10** is a schematic diagram illustrating amplitude relationships among ambient light data, ambient light data, raw point cloud data, and corrected point cloud data according to an embodiment of the present application;
**FIG. 11** is a schematic diagram illustrating exposure timing for grayscale images according to an embodiment of the present application;
**FIG. 12** is a schematic diagram illustrating an activation distribution of receiving units during simultaneous acquisition of point cloud data and grayscale data according to an embodiment of the present application;
**FIG. 13** is a schematic diagram illustrating determination of open receiver required for partial grayscale image formation according to an embodiment of the present application;
**FIG. 14** is a schematic diagram illustrating signal processing and storage of point cloud data and grayscale data according to an embodiment of the present application;
**FIG. 15** is a flowchart of a method for outputting grayscale data according to an embodiment of the present application;
**FIG. 16** is a schematic structural diagram of a LIDAR apparatus according to an embodiment of the present application.

### DETAILED DESCRIPTION

The technical solutions of the present application will now be described clearly and comprehensively with reference to the accompanying drawings. In the description of the embodiments of the present application, unless otherwise specified, the symbol "/" denotes an inclusive "or." For example, "A/B" may represent A or B. The term "and/or" in the text describes an associative relationship between objects, indicating three possible scenarios. For instance, "A and/or B" may represent: A alone, both A and B together, or B alone. Additionally, in the description of the embodiments, the term "a plurality of" refers to two or more.

The terms "first" and "second" are used for descriptive purposes only and should not be construed as implying relative importance or implicitly specifying the quantity of the indicated technical features. Thus, features modified by "first" or "second" may explicitly or implicitly include one or more such features.

A LIDAR system operates by emitting detection laser beams into a detection field through a transmitter. The receiving device of the LIDAR (also referred to as a receiving module, receiving circuit, or receiving chip) then captures echo signals reflected from the detection field. By processing these echo signals-for example, measuring the time difference between laser emission and reception-the LIDAR outputs point cloud data, which primarily indicates distance information of target objects in the detection field to enable object recognition and ranging. While LIDAR systems traditionally focus on outputting point cloud data (distance information), relying solely on such data without imaging capabilities may compromise the accuracy of downstream image processing and decision-making.

To enable LIDAR-based perception systems to output both point cloud data and images of the detection field, the following solutions exist: Solution (1): Integrate a camera into the LIDAR product. Solution (2): Add a camera to the perception system. Solution (3): Utilize the LIDAR's native receiving devices (e.g., SPAD/SiPM devices) to generate grayscale images. Principle of Solution (3): Similar to CCD or CMOS sensors in cameras, SPAD devices in LIDAR generate electrical signals upon photon reception. By recording the total photon count received over a period, the photon count sampling value serves as the grayscale value, enabling grayscale image generation.

Solutions (1) and (2): Require adding cameras to the LIDAR product or perception system, increasing costs. Furthermore, since grayscale images and point cloud data are derived from separate devices, angular misalignment between the two datasets may occur, degrading subsequent image processing.

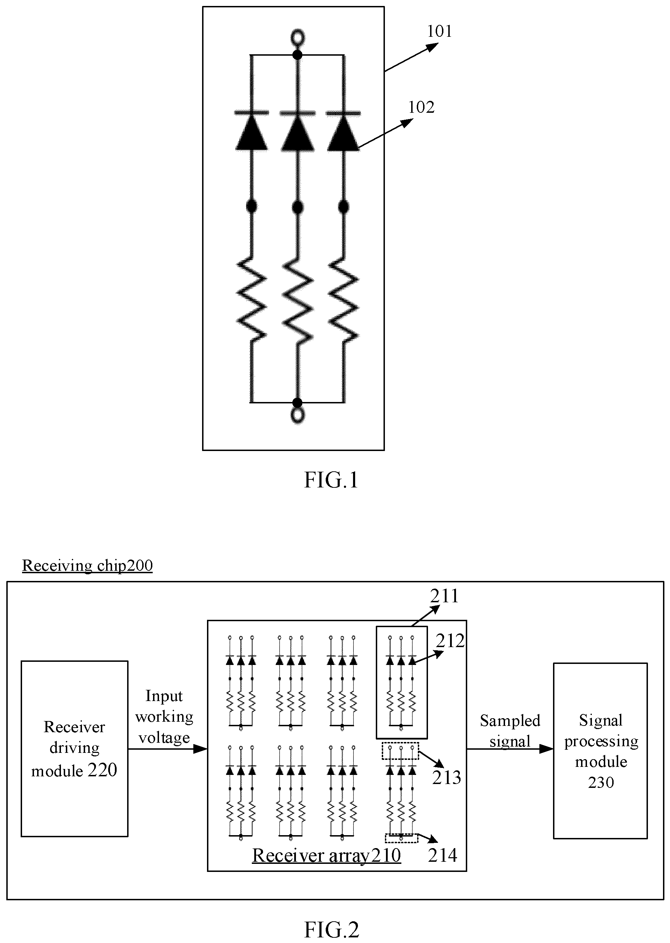

Solution (3): While leveraging the LIDAR's native receiving devices avoids additional cameras and eliminates angular misalignment, conventional receivers (e.g., the SiPM device 101 in FIG. 1) exhibit limitations. For example, a conventional receiver 101 includes three receiving units (SPADs) 102 that operate simultaneously. This configuration outputs only a single signal value per receiver, corresponding to one pixel/grayscale value in the grayscale image, resulting in low-resolution imaging.

To address the issue of low-resolution grayscale images output by LIDAR devices, embodiments of the present application provide a receiving chip for a LIDAR. The receiving chip is equipped with specialized receivers, enabling the LIDAR device to output grayscale images (or grayscale data) while improving the resolution of the generated grayscale images.

It should be noted that the LIDAR receiving chip provided in the embodiments of the present application may be a circuit component independent of the LIDAR main control chip or a circuit component integrated into the LIDAR main control chip. No limitation is imposed on this configuration in the embodiments of the present application.

FIG. 2 is a schematic structural diagram of a receiver chip according to an embodiment of the present application. By way of example, as shown in FIG. 2, the receiver chip 200 comprises: a receiver array 210, a receiver driving module 220, and a signal processing module 230. The receiver array 210 includes a plurality of open receivers 211. Each open receiver 211 includes N receiving units 212, where the N receiving units 212 are provided with at least two control switches and share a single output channel 214, with N being an integer greater than or equal to 2.

By way of example, the open receiver 211 illustrated in FIG. 2 includes 3 receiving units 212 with 3 control switches, corresponding to N receiving units having N control switches. Optionally, in other embodiments, an open receiver may include 9 receiving units with 3 control switches, where every three receiving units share one control switch. That is, N receiving units may be provided with M control switches, where M is an integer greater than or equal to 2 and less than N. In summary, each open receiver includes N receiving units having at least two control switches.

Unlike the conventional receiver 101 in FIG. 1, where all receiving units 102 are simultaneously switch-controlled, each receiving unit 212 in the open receiver 211 of FIG. 2 can be individually switch-controlled. When acquiring grayscale images, each conventional receiver in FIG. 1 outputs only 1 pixel of the grayscale image, whereas each open receiver 211 in FIG. 2 contains N receiving units that are individually controlled to receive photons (ambient light). Through multi-frame acquisition, the open receiver 211 can output N pixels for the grayscale image. Compared to the conventional receivers in FIG. 1, the open receivers in FIG. 2 significantly improve the resolution of the generated grayscale image.

The receiver driving module 220 is configured to input a working voltage to m receiving units 212 within the open receiver 211 during each grayscale data acquisition process, where m is a positive integer less than N.

In one embodiment, the receiver driving module 220 inputs the working voltage to the receiving units 212 via an open end 213 of the open receiver 211.

Although the receiving units in the open receiver can control the switch individually, only a single output channel is provided, that is, at the same time (or in the same frame), only one gray value can be output by a single open receiver. If the gray values output by the receiving units in the open receiver are required to be obtained, the receiving units at different positions in the open receiver need to be opened in multiple frames. For example, if 9 receiving units are included in the open receiver, one receiving unit in the open receiver is opened in each gray data acquisition process, and one gray value of the gray image output by each open receiver in each gray data acquisition process is obtained. 9 sets of gray data are obtained by 9 times of gray data acquisition, the receiving units opened in the open receiver are different in different gray data acquisition processes. The 9 sets of gray data are spliced to obtain a complete gray image.

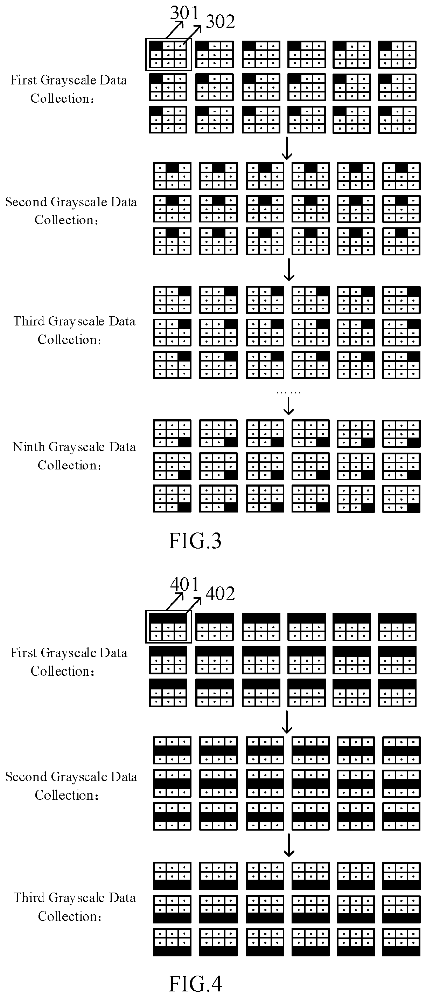

FIG. 3 is a schematic diagram illustrating the activation distribution of receiving units according to an embodiment of the present application. As shown in FIG. 3, taking a receiver array comprising a 3×6 array of open receivers 301 as an example, where each open receiver 301 includes 9 receiving units 302 and only 1 receiving unit 302 (i.e., *m*=1) within each open receiver 301 is activated to receive ambient light during each grayscale data acquisition process: during the first grayscale data acquisition process, the receiving unit located at the upper-left corner of each open receiver 301 (corresponding to the black-filled portion in FIG. 3) is controlled to activate and receive ambient light, thereby obtaining 3×6 grayscale values. During the second grayscale data acquisition process, the receiving unit located in the first row and second column of each open receiver 301 is controlled to activate and receive ambient light, yielding 3×6 grayscale values. During the third grayscale data acquisition process, the receiving unit located at the upper-right corner of each open receiver 301 is controlled to activate and receive ambient light, producing 3×6 grayscale values. This process continues sequentially until the ninth grayscale data acquisition process, during which the receiving unit located at the lower-right corner of each open receiver 301 is controlled to activate and receive ambient light. Through these nine grayscale data acquisition processes, nine sets of 3×6 grayscale values are obtained. By stitching these nine sets of grayscale values, a grayscale image with a resolution of 3×6×9 is generated.

Based on the grayscale image output process described for FIG. 3 using the open receiver, to control the activation of individual receiving units within the open receiver, the receiver chip is provided with a receiver driving module. This module is configured to input a working voltage to the receiving units, thereby controlling their activation. Specifically: during each grayscale data acquisition process, the *m* receiving units to be activated within each open receiver are first determined. The receiver driving module then applies the working voltage to the m receiving units within the open receiver, enabling them to receive ambient light under the working voltage. The remaining receiving units (excluding the m activated units) remain in a non-operational state.

Note: FIG. 3 uses *m* is 1 as an example. In other embodiments, *m* may be an integer greater than 1 and less than N. For instance, if an open receiver includes 9 receiving units, 3 receiving units may be activated during each grayscale data acquisition process. The photons received by these 3 units are summed to generate a single grayscale value. Thus, *m* may be any positive integer less than *N.*

FIG. 4 is a schematic diagram illustrating another activation distribution of receiving units according to an embodiment of the present application. As shown in FIG. 4, taking a receiver array comprising a 3×6 array of open receivers 401 as an example, where each open receiver 401 includes 9 receiving units 402 and 3 receiving units (i.e., *m*>1) within each open receiver 401 are activated to receive ambient light during each grayscale data acquisition process: during the first grayscale data acquisition process, the 3 receiving units in the first row of each open receiver 401 (corresponding to the black-filled portion in FIG. 4) are controlled to activate and receive ambient light, thereby obtaining 3×6 grayscale values. During the second grayscale data acquisition process, the 3 receiving units in the second row of each open receiver 401 are controlled to activate and receive ambient light, yielding 3×6 grayscale values. During the third grayscale data acquisition process, the 3 receiving units in the third row of each open receiver 401 are controlled to activate and receive ambient light, producing 3×6 grayscale values. Through these three grayscale data acquisition processes, three sets of 3×6 grayscale values are obtained. By stitching these three sets of grayscale values, a grayscale image with a resolution of 3 \times 6 \times 33×6×3 is generated.

Analysis of FIGs. 3 and 4: the resolution of the grayscale image depends on two factors: the number of receiving units included in each open receiver, and the number of receiving units activated within each open receiver during each grayscale data acquisition process. Under the condition that open receivers contain the same number of receiving units and share a single output channel, reducing the number of receiving units activated per acquisition process increases the resolution of the final grayscale image.

In conventional receivers (prior art), the output signal of each receiver can generate only one grayscale value. By contrast, the open receiver enables activation of different receiving units during successive acquisition processes. This allows each open receiver to correspond to multiple grayscale values after multiple acquisitions. Compared to a single grayscale value per conventional receiver, this approach significantly improves grayscale image resolution while reusing the output and data processing channels designed for point cloud mode.

The m receiving units 212 within the open receiver 221 are configured to:
(a) Receive ambient light under the working voltage.
(b) Output a first sampled signal generated by summing the signals from the m receiving units 212 after ambient light reception.

For the m receiving units 212, after receiving ambient light, m signals are generated. These m signals are summed via the single output channel 214 to produce the first sampled signal. When *m* is 1, a single receiving unit receives ambient light and outputs one signal, which directly serves as the first sampled signal. When *m*>1 and *m<N*, the *m* signals generated by the m receiving units after receiving ambient light are summed to produce one first sampled signal.

During grayscale image generation, no laser emission is required; imaging is achieved using ambient light. Correspondingly, the m receiving units in the open receiver are capable of receiving ambient light under the working voltage and outputting the first sampled signal obtained by summing the signals from the m receiving units. This first sampled signal represents the total photon count received by the m receiving units over a defined period.

As shown in FIG. 3, during the first grayscale data acquisition process, the working voltage is applied to the receiving unit at the upper-left corner of the open receiver 301. This receiving unit then receives ambient light under the working voltage and outputs the first sampled signal generated after ambient light reception. Similarly, as shown in FIG. 4, during the first grayscale data acquisition process, the working voltage is applied to the three receiving units in the first row of the open receiver 401. These units receive ambient light under the working voltage, and the first sampled signal output represents the total photon count accumulated by the three receiving units in the first row.

The signal processing module 230 is configured to process the first sampled signals acquired by the open receiver during each grayscale data acquisition process to generate grayscale data.

When the receiver array includes multiple open receivers, during each grayscale data acquisition process: One open receiver may be activated, or multiple open receivers may be activated to receive ambient light. The number of activated open receivers is determined by the grayscale image acquisition requirements or the acquisition mode.

If only one open receiver is activated during each grayscale data acquisition process, there are primarily two scenarios. In one scenario, a single receiving unit is activated to receive ambient light during each grayscale data acquisition (m is 1). After N grayscale data acquisition processes, one open receiver can output N grayscale values (or N pixel values). In another scenario, multiple receiving units are activated to receive ambient light during each grayscale data acquisition (where m is greater than 1 but less than N). The number of receiving units activated can be consistent or vary across different acquisition processes. For scenarios with varying numbers of activated elements, the number of receiving units activated in each open receiver during each acquisition process can be configured based on the location or region of the target area corresponding to those receiving units. For instance, if the target area corresponds to the central region of an open receiver, a single receiving unit in the central area might be activated per acquisition process, while three receiving units in the peripheral area could be activated simultaneously. Alternatively, the number of receiving units activated in the peripheral area could be positively correlated with their distance from the central area, meaning that a greater number of receiving units are activated in the peripheral area as the distance from the center increases. This configuration results in the central region of the final grayscale image having a higher resolution than the peripheral regions.

If multiple open receivers are activated during each grayscale data acquisition process (for example, Q open receivers), there are primarily two scenarios: Scenario 1, where the number of activated receiving units is the same across different open receivers during each grayscale data acquisition process; and Scenario 2, where the number of activated receiving units varies across different open receivers during each grayscale data acquisition process.

For case 1, if the number of receiving units activated in each open receiver during each grayscale data acquisition process is 1 (m is 1), then Q grayscale values (or pixel values) can be output in each grayscale data acquisition process. After N grayscale data acquisition processes, Q*N grayscale values can be output and stitched together to form a frame of grayscale image. If the number of receiving units activated in each open receiver during each grayscale data acquisition process is greater than 1 but less than N, then Q grayscale values can be output in each grayscale data acquisition process. The plurality of pieces of grayscale data generated in a plurality of grayscale data acquisition processes are used for splicing to obtain a frame of grayscale image.

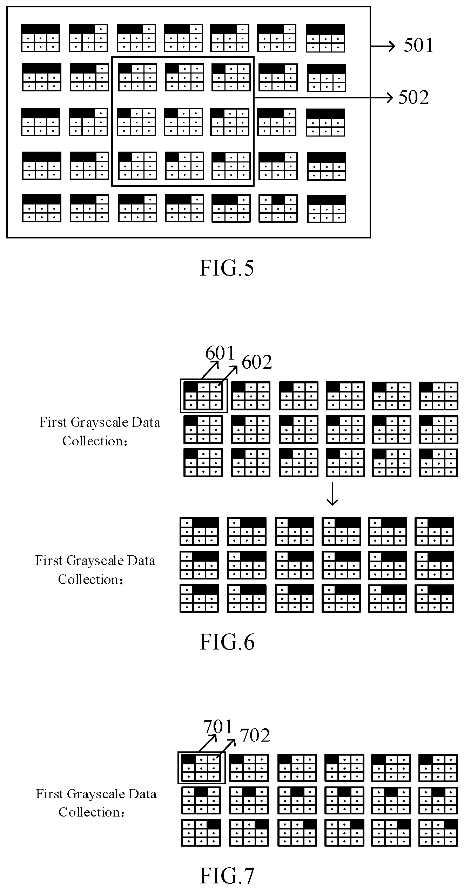

For case 2, the number of activated receiving units can be differentiated based on the different regions of the receiving array where the open receivers are located. For instance, open receivers in key imaging area may have fewer receiving units activated compared to those in key imaging area. As an example, open receivers in the key imaging area might activate only one receiving unit in each grayscale data acquisition process, while those in non-key imaging area regions activate 3 receiving units in each grayscale data acquisition process. This configuration results in the key imaging area of the final grayscale image having a higher resolution than the non- key imaging area. FIG. 5 presents another exemplary distribution of activated receiving units according to an embodiment of this application. As illustrated in FIG. 5, take a receiving array 501 comprising 3*7 open receivers as an example, with each open receiver containing 9 receiving units. If the key imaging area is 502, then during each grayscale data acquisition process, each open receiver within the key imaging area 502 activates one receiving unit to receive ambient light, while open receivers in the non-key imaging area (regions of the receiving array 501 outside the key imaging area 502) activate more than one receiving unit to receive ambient light. Optionally, the number of activated receiving units can also be determined based on the distance from the key imaging area 502. For instance, open receivers adjacent to the key imaging area 502 might activate two receiving units in each grayscale data acquisition process, while those not adjacent to the key imaging area 502 activate three receiving units. This ensures that, in the final grayscale image, the resolution of the key imaging area is higher than that of the non-key imaging area.

Since the grayscale data obtained during one grayscale data acquisition process only represents a portion of the complete grayscale image, multiple grayscale data acquisition processes are required to assemble a full frame of grayscale image. In other words, a plurality of pieces of grayscale data generated in a plurality of grayscale data acquisition processes are used for splicing to obtain a frame of grayscale image, with the receiving units in the open receiver activated at different positions for ambient light reception in each acquisition process.

During grayscale image stitching, if m is set to 1, it means that one receiving unit within each open receiver is activated to receive ambient light during each grayscale data acquisition process, and each grayscale data acquisition process corresponds to all open receivers in the receiving array. Given an open receiver containing N receiving units, N grayscale data acquisition processes will yield N sets of grayscale data. These N sets of grayscale data, corresponding to the positions of the receiving units, can be stitched together to form a complete frame of grayscale image. In essence, when m=1 and each grayscale data acquisition process corresponds to all open receivers in the receiving array, the N sets of grayscale data collected by the receiver chip are utilized to generate a frame of grayscale image.

The statement " the receiving units receiving the ambient light in the open receiver are different in different grayscale data acquisition processes " can be interpreted as follows: in each grayscale data acquisition process, the activated receiving unit within the same open receiver is located at a different position. As shown in FIG. 3, in the first grayscale data acquisition process, the activated receiving unit in each open receiver might be positioned at the top-left corner; in the second process, it could shift to the second column of the first row; and in the third process, it might move to the top-right corner.

Alternatively, the statement " the receiving units receiving the ambient light in the open receiver are different in different grayscale data acquisition processes" can also mean that both the position and the number of activated receiving units within the same open receiver vary across different grayscale data acquisition processes. FIG. 6 provides another exemplary distribution of activated receiving units. As illustrated, the receiving array comprises 3*6 open receivers (601), each containing 9 receiving units (602). In the first grayscale data acquisition process, only the top-left receiving unit in each open receiver is activated to receive ambient light. In the second process, the second and third receiving units in the first row of each open receiver are activated.

To facilitate the subsequent stitching of grayscale data acquired in multiple acquisition processes, when multiple open receivers are activated during each grayscale data acquisition process, the m receiving units can be positioned at the same location across different open receivers. For example, in the first grayscale data acquisition process, the top-left receiving unit of each open receiver could be uniformly activated. In the second process, the second receiving unit in the first row of each open receiver might be uniformly activated.

Optionally, during each grayscale data acquisition process, the m receiving units can be positioned at different locations within different open receivers. FIG. 7 presents another exemplary distribution of activated receiving units according to an embodiment of this application. As illustrated in FIG. 7, take a receiving array comprising 3*6 open receivers 701 as an example, with each open receiver 701 containing 9 receiving units 702. During the first grayscale data acquisition process: the first row of open receivers each activates one receiving unit located at the top-left corner to receive ambient light; the second row of open receivers each activates one receiving unit located in the second column of the first row to receive ambient light; and the third row of open receiver each activate one receiving unit located at the top-right corner to receive ambient light.

Considering that the receiving array comprises multiple open receivers, operators can choose to utilize all open receivers or only a subset of them during actual grayscale image scanning, depending on the specific requirements for grayscale image acquisition. Consequently, the receiver chip supports multiple grayscale scanning modes. In different grayscale scanning modes, the open receivers in the receiving array that are activated to receive ambient light vary during each grayscale data acquisition process.

The statement "the open receivers in the receiving array that are activated to receive ambient light vary during each grayscale data acquisition process" can be interpreted in three ways: first, the number of open receivers activated in the receiving array differs during each grayscale data acquisition process; second, the positions of the open receivers activated in the receiving array differ during each grayscale data acquisition process; third, both the number and positions of the open receivers activated in the receiving array differ during each grayscale data acquisition process.

Optionally, in other grayscale scanning modes, the number and positions of open receivers to be activated during grayscale data acquisition can be selected based on the location of the detected object (e.g., an obstacle). In other words, a subset of open receivers within the receiving array can be selectively activated based on the region where the detected object is located.

Optionally, if all open receivers in the receiving array are activated during each grayscale data acquisition process, the number of receiving units to be activated in each open receiver can be further adjusted based on the region where the detected object (e.g., an obstacle) is located. For instance, a portion of the open receiver corresponding to the region where the detected object is located might activate fewer receiving units during each grayscale data acquisition process compared to open receivers in other regions. This configuration results in the image resolution of the region where the detected object is located being higher than that of other regions.

For instance, the grayscale scanning modes supported by the receiver chip can be illustrated in Table 1.

**Table 1.**

| **scanning modes** | **description** |
|---|---|
| 0 | One laser scans, and one receiving unit receives |
| 1 | One laser scans, and two receiving units receive simultaneously |
| 2 | A row of lasers scan simultaneously, and a row of receiving units receive simultaneously |
| 3 | Two lasers scan simultaneously, and two rows of receiving units receive simultaneously |
| .... | ..... |

As shown in Table 1, comparing Scanning Mode 0 and Scanning Mode 1, the number of open receivers receiving ambient light differs in each grayscale data acquisition process: Scanning Mode 0 activates 1 open receiver in each grayscale data acquisition process, while Scanning Mode 1 activates 2 open receivers in each grayscale data acquisition process. Comparing Scanning Mode 2 and Scanning Mode 3, both the number and positions of open receivers receiving ambient light vary in each grayscale data acquisition process.

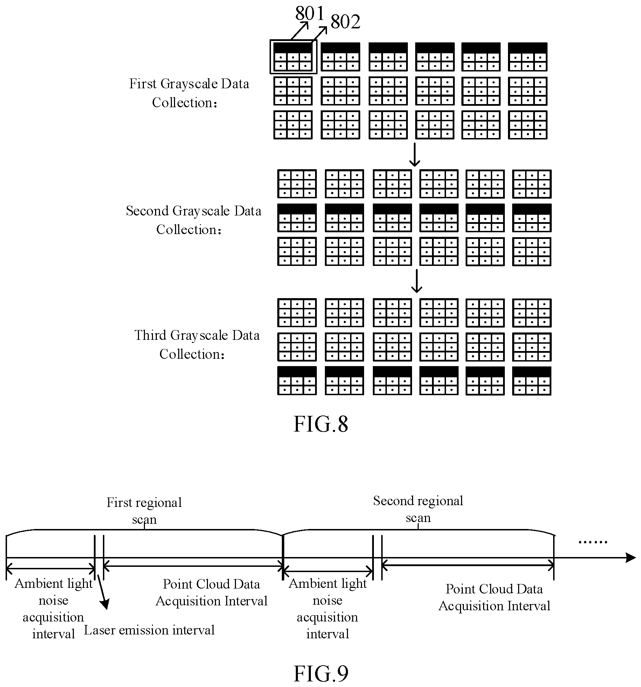

Optionally, even under the same grayscale scanning mode, the open receiver activated in the receiving array can differ across different grayscale data acquisition processes. FIG. 8 presents another exemplary distribution of activated receiving units according to an embodiment of this application. As illustrated in FIG. 8, take a receiving array comprising 3*6 open receivers 801 as an example, with each open receiver 801 containing 9 receiving units 802. During the first grayscale data acquisition process, only the first row of open receivers are activated to receive ambient light, with 3 receiving units in the first row of each open receiver activated. During the second grayscale data acquisition process, only the second row of open receivers are activated to receive ambient light, with 3 receiving units in the first row of each open receiver activated. During the third grayscale data acquisition process, only the third row of open receivers are activated to receive ambient light, with 3 receiving units in the first row of each open receiver activated.

In summary, this application provides a receiver chip comprising a receiving array with multiple open receivers. By controlling the switching of receiving units within the open receiver, high-resolution grayscale images can be output. Furthermore, the receiver chip can reuse the LIDAR's existing receiving components, enabling grayscale image acquisition without incurring additional costs.

Based on the receiver chip illustrated in FIG. 2, it is capable of both grayscale data acquisition and point cloud data acquisition. The process for point cloud data acquisition is as follows:

The receiving drive module is also responsible for inputting a working voltage to all N receiving units within the open receiver during each point cloud data acquisition process.

Unlike the grayscale data acquisition process, in the point cloud data acquisition process, all N receiving units within the open receiver are activated simultaneously to receive echo signals, which correspond to one pixel point on the point cloud map. Correspondingly, in the point cloud mode, the receiving drive module applies a working voltage to all N receiving units within the open receiver during each point cloud data acquisition process to control their simultaneous activation.

The N activated receiving units within the open receiver receive echo signals and output a second sampled signal, which is the cumulative signal of the N receiving units.

For each open receiver, upon activation of the N receiving units, these elements receive echo signals and output a second sampled signal, which represents the cumulative signal of the N receiving units.

Here, the echo signal refers to the signal reflected back by the target object within the detection field of view after the LIDAR's transmitting device emits a detection laser towards the detection field of view. In other words, the acquisition of point cloud data requires the LIDAR to activate the laser emission.

In point cloud mode, there is a period before the laser transmitter is activated to detect ambient light. The point cloud data obtained after activating the laser emission needs to subtract this ambient light value to obtain the correct point cloud data. For grayscale imaging, laser emission is not required, and natural light (ambient light) is used for imaging. The photon count sampling value received by each pixel during exposure is the grayscale value. The ambient light time in point cloud mode can also be utilized for grayscale imaging, and the exposure time for grayscale imaging can be controlled by adjusting the ambient light acquisition time. For example, the LIDAR can be configured not to emit laser signals during the first time period for grayscale data acquisition and to emit laser signals during the second time period for point cloud data acquisition.

FIG. 9 presents an exemplary exposure time diagram in point cloud mode according to an embodiment of this application. In both the first regional scan phase and the second regional scan phase, there is an ambient light noise acquisition interval before the laser transmitter is activated. During this interval, ambient light noise data is collected for subsequent correction of the point cloud data. After the ambient light noise data is collected, the laser transmitter is activated to emit a laser signal towards the detection field of view (corresponding to the laser emission interval in FIG. 9), and point cloud data is collected during the point cloud data acquisition interval to obtain raw point cloud data.

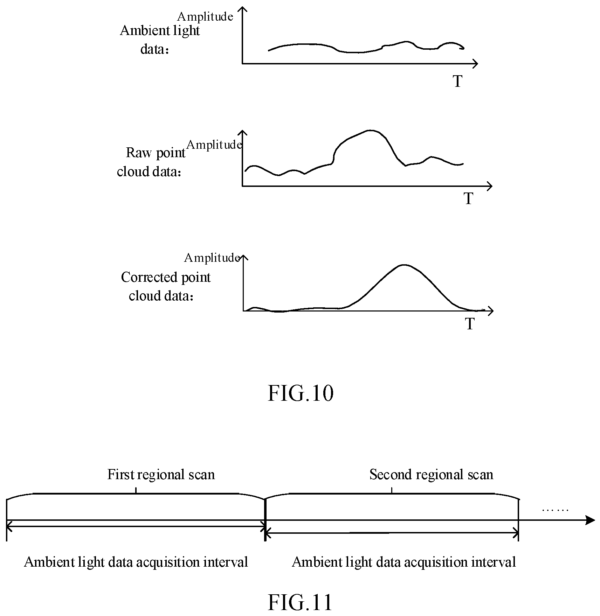

Since the raw point cloud data obtained after activating the laser emission needs to subtract the ambient light noise value to obtain the correct point cloud data, the amplitude relationship between the ambient light data, raw point cloud data, and corrected point cloud data is illustrated in FIG. 10.

In consideration of the fact that the grayscale image is formed by using natural light or ambient light without laser emission, the number of photons received by each pixel in the exposure is sampled as the grayscale value. Based on the point cloud data acquisition stage shown in FIG. 9, the laser emission is not started in the ambient light noise acquisition interval. Therefore, the laser radar device can directly use the ambient light noise acquisition interval in the point cloud mode to form the grayscale image. That is, the receiving array is controlled to receive ambient light according to the grayscale data acquisition logic in the ambient light noise acquisition interval, output a first sampled signal (i.e., the number of photon sampling values), and obtain grayscale data by processing the first sampled signal.

On the basis of the ambient light noise collection interval (ambient light collection interval) in the point cloud mode can be used for gray scale image imaging, the ambient light collection time can be adjusted to control the exposure time of the gray scale image imaging, and the laser radar device does not start laser emission at this time. For example, the ambient light collection time is increased, and the point cloud data collection time is correspondingly reduced; or the point cloud data collection time is directly removed, and only the ambient light data collection is performed. In other words, the time for the laser radar device to collect the gray scale data and the time for the laser radar device to collect the point cloud data are not overlapped.

FIG. 11 presents an exemplary exposure time diagram for a grayscale image according to an embodiment of this application. In each regional scan phase, the laser emission is not activated, and only ambient light data is collected, meaning there is only an ambient light data acquisition interval.

Since the point cloud data itself involves the collection and processing of ambient light noise data (ambient light data) when being processed, the laser radar device originally has corresponding signal transmission paths and signal processing logic; and the open receiver in the application is adopted, at the same collection moment, each open receiver only outputs a single sampled signal, the number of ambient light sampled signals output by each open receiver in the point cloud mode is the same, and in the gray data collection process, the signal transmission path and the corresponding signal processing logic of the ambient light in the point cloud mode can be directly reused, without the need to increase the signal transmission path, so that the output of the high-resolution gray image can be realized while saving the hardware cost of the Lidar.

Considering that grayscale data acquisition and point cloud data acquisition are affected by whether the laser emission is activated, under the condition of optical isolation (i.e., isolating the echo signal of the laser emission through an optical isolator), the receiving array can be divided into a first receiving area and a second receiving area. Within a single acquisition cycle, the open receivers in the first receiving area are used to receive ambient light to output the first sampled signal, which is processed to obtain grayscale data. The open receivers in the second receiving area are used to receive echo signals to output the second sampled signal, which is processed to obtain a frame of point cloud data. This enables the LIDAR device to simultaneously collect grayscale data and point cloud data within the same acquisition cycle, reducing the acquisition time required to obtain a frame of grayscale image compared to the method of collecting grayscale data and point cloud data at different times. It should be understood that the optical isolation method can also involve physically isolating the receiving area for point cloud reception and the receiving area for grayscale image reception during the same acquisition, ensuring that the receiving array in the grayscale image receiving area is not affected by optical crosstalk from the echo laser. This application does not impose specific restrictions on the specific method of optical isolation. For example, as shown in FIG. 3, the receiving area for point cloud reception in the same acquisition can be the receivers in the first row of the receiving array, while the receiving area for grayscale image reception can be the receivers in the third row of the receiving array.

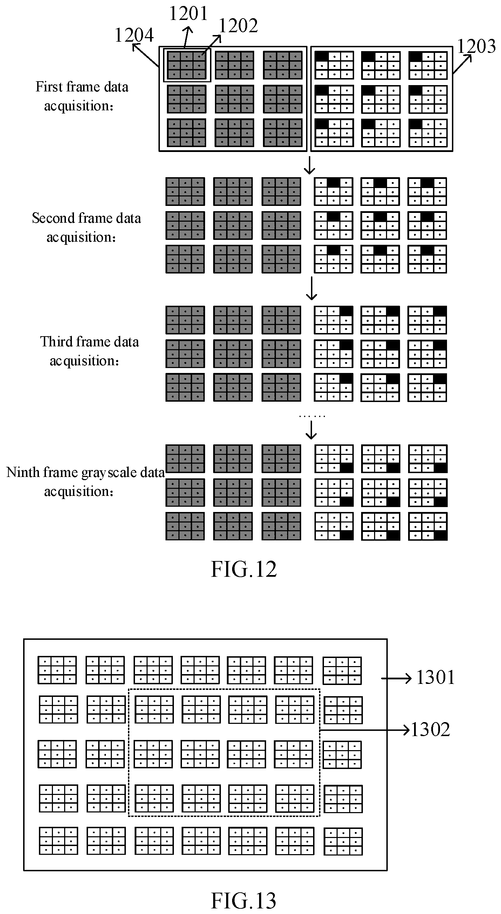

FIG. 12 is a schematic diagram of the opening distribution of the receiving units when the point cloud data and the grayscale data are collected simultaneously according to an embodiment of the application. Taking the receiving array of the laser radar device as an example, the receiving array includes 3*6 open receivers 1201, and each open receiver 1201 includes 9 receiving units 1202. The receiving array is divided into a first receiving region 1203 and a second receiving region 1204, and the first receiving region and the second receiving region are optically isolated. The open receiver 1201 in the first receiving region 1203 is used for receiving ambient light in the ambient light noise collection interval shown in FIG. 9, and one receiving unit in each open receiver is opened to receive the ambient light and output a first sampled signal. It can be understood that the open receiver 1201 collects the point cloud in the corresponding point cloud data collection interval, so that the reflectivity of the point cloud of the receiver 1201 is corrected by the first sampled signal. The open receiver 1201 in the second receiving region 1204 is used for collecting the ambient light data in the entire ambient light collection interval and the point cloud data collection interval of the open receiver 1201 in the first receiving region 1203. In the second receiving region, 9 receiving units in each open receiver 1201 are opened in turn to receive the ambient light signal, and output a second sampled signal. The grayscale data of the second receiving region 1204 is obtained by processing a plurality of second sampled signals. Therefore, the grayscale map of the second region can be obtained while the point cloud is scanned in the first region 1204.

When optical isolation is employed, point cloud data and grayscale data can be output within the same exposure time. For open receiver outputting point cloud data, each receiver outputs a single pixel value during this exposure time. For open receiver outputting grayscale data, each pixel can be rapidly scanned in a polling manner during this exposure time. Specifically, the receiving units within each open receiver can be polled to activate and receive ambient light, resulting in multiple grayscale values being output by each open receiver during the exposure time. By employing an optical isolator and a rapid polling scan mode for the receiving units, it is possible to output a frame of point cloud image while also outputting a frame of grayscale image, avoiding the need for multiple exposure times to acquire a single frame of grayscale image, thereby reducing the acquisition time for grayscale images.

The signal processing module is further configured to process the second sampled signals output by the open receiver during each point cloud data acquisition process to obtain point cloud data.

In cases where the receiving array includes multiple open receivers, either a single open receiver or multiple open receivers can be activated to receive echo signals during each frame of point cloud data acquisition. The number of activated open receivers is determined by the acquisition requirements or acquisition mode of the point cloud image.

If all open receivers in the receiving array are activated during each point cloud data acquisition process, meaning all receiving units in the receiving array are used to receive echo signals, a complete point cloud image of the detection field of view can be obtained. In other words, when all open receivers in the receiving array are activated to receive echo signals, the point cloud data output by the receiving chip during each point cloud data acquisition process can be used to generate a frame of point cloud image.

During the grayscale data acquisition process, if m is set to 1, meaning one receiving unit in each open receiver is activated during each grayscale data acquisition, each open receiver can ultimately output N grayscale values after multiple grayscale data acquisitions. In contrast, during the point cloud data acquisition process, N receiving units in each open receiver are activated during each point cloud data acquisition, and the signal output by each open receiver corresponds to a single pixel point in the point cloud image. Consequently, the resolution of a frame of grayscale image, which is stitched together based on the grayscale data output by the receiving chip, is N times the resolution of a corresponding frame of point cloud image.

In addition to outputting grayscale data and point cloud data, the LIDAR is also equipped with multiple grayscale image trigger modes to meet the acquisition requirements for both point cloud data and grayscale data within the same LIDAR operating cycle. These grayscale image trigger modes include a first mode, a second mode, and a third mode.

When the grayscale image trigger mode is set to the first mode, the receiving chip continuously outputs grayscale data. In this mode, the receiving chip exclusively executes the grayscale data acquisition logic to collect grayscale data, without collecting point cloud data.

When the grayscale image trigger mode is set to the second mode, the receiving chip switches to collecting grayscale data a predetermined number of times after collecting point cloud data a first predetermined number of times. In this mode, the receiving chip periodically collects grayscale data and point cloud data. For example, if the first predetermined number is 5, the receiving chip will switch to execute the grayscale data acquisition logic and collect grayscale data a second predetermined number of times after every 5 collections of point cloud data. The second predetermined number can be an integer multiple of the number of grayscale data acquisitions required to generate one frame of grayscale image. For instance, if 9 grayscale data acquisitions are needed to generate one frame of grayscale image, the second predetermined number can be 9, 18, 27, or any other integer multiple of 9.

When the grayscale image trigger mode is set to the third mode, the receiving chip switches to point cloud data acquisition mode after collecting the grayscale data required for one frame of grayscale image. In this mode, upon acquiring the necessary grayscale data for a frame of grayscale image, the receiving chip switches to point cloud data acquisition mode and continuously executes the point cloud data acquisition logic.

Optionally, the grayscale image trigger mode can be configured in a register. The receiving chip can read the grayscale trigger mode from this register and execute the acquisition of grayscale data and point cloud data accordingly.

An exemplary configuration of the grayscale image trigger modes is presented in Table 2.

**Table 2.**

| Grayscale Image Trigger Mode | description |
|---|---|
| 0 | Fixed Grayscale Image Mode (Continuous grayscale image acquisition) |
| 1 | Periodic Grayscale Image Mode (In periodic grayscale mode, configure the number of frames between point cloud frames) |
| 2 | Single Grayscale Image Mode (In single grayscale image mode, grayscale image pulse enable, active high, self-clearing) |
| 3 | Point Cloud and Grayscale Image Concurrent Output Mode |
| ... | .... |

Within the LIDAR operating cycle, point cloud data and grayscale data can be collected independently, meaning both can capture the entire detection field of view corresponding to point cloud images and grayscale images. They can also be collected in a coordinated manner. For example, if a critical region within the detection field of view is identified based on the point cloud image, high-resolution grayscale imaging can be performed solely on this critical region to reduce the grayscale image acquisition time and data volume.

Since each pixel in the point cloud image corresponds to an open receiver, after identifying the target imaging area based on the point cloud image, the row and column numbers of the pixels within this target imaging area can be obtained. Furthermore, based on these row and column numbers, the positions of the open receivers to be activated during grayscale image acquisition can be determined. In one possible implementation, after determining the start row number, end row number, start column number, and end column number for grayscale image acquisition based on the point cloud data, during the grayscale data acquisition process, the region within the receiving array spanning from the start row number to the end row number, and from the start column number to the end column number is designated as the target reception area. This target reception area specifies the location of the open receiver in the receiving array that will be activated to receive ambient light during grayscale data acquisition.

FIG. 13 illustrates an exemplary method for determining the open receiver required for partial grayscale image acquisition. As shown in FIG. 13, if the start row number for grayscale image acquisition is determined to be row 2, the end row number is row 4, the start column number is column 3, and the end column number is column 6, and given a receiving array 1301 comprising 5*7 open receivers, the target reception area encompasses the region from rows 2 to 4 and columns 3 to 6 (corresponding to region 1302 in FIG. 13).

Optionally, in addition to reusing the same receiving array, point cloud data and grayscale data acquisition can also share the same signal processing channels and data storage locations.

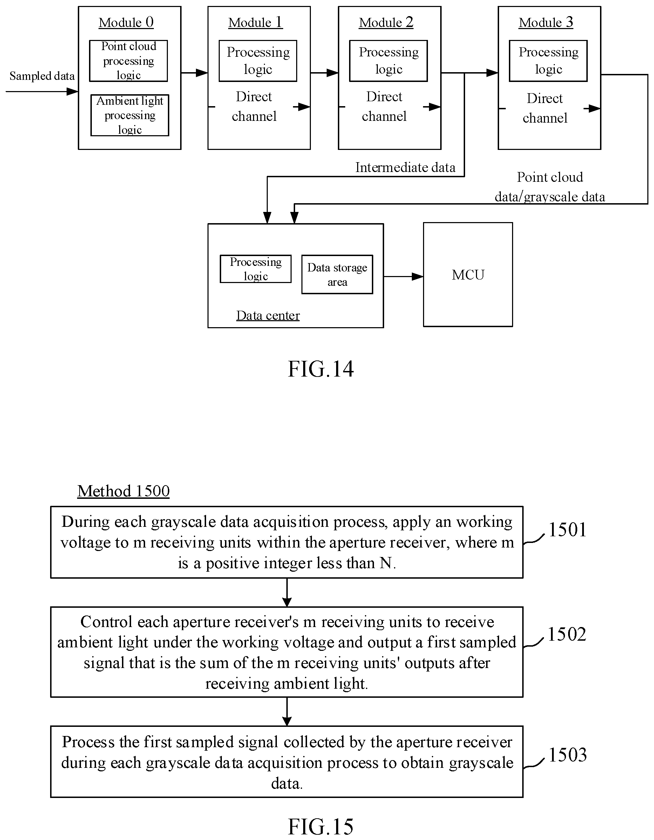

FIG. 14 illustrates the signal processing and storage for both point cloud data and grayscale data. As shown in FIG. 14, during grayscale data acquisition, only the ambient light accumulation logic (ambient light processing logic) is activated in Module 0, while the point cloud processing logic remains inactive. Subsequent modules (Modules 1, 2, and 3) operate in a pass-through mode, processing grayscale data through a dedicated pass-through channel without further manipulation. The processed grayscale data is then transmitted to the data storage area of the data center for storage. Once a sufficient amount of data is accumulated, an interrupt is generated and sent to the MCU, which responds by transferring the data away. During point cloud data acquisition, Module 0 activates the point cloud processing logic, and subsequent modules perform multi-stage processing on the point cloud data. The processed point cloud data, along with intermediate data generated during the processing, is transmitted to the data center for storage.

As depicted in FIG. 14, during grayscale data acquisition, the signal processing module transmits grayscale data to the data center module via a pass-through channel. During point cloud data acquisition, the signal processing module performs multi-stage processing on the point cloud data and transmits the processed point cloud data, along with the intermediate data generated during processing, to the data center module.

When reusing the point cloud storage space, grayscale image storage (grayscale data storage) within the data center does not require additional storage space. Instead, it reuses the storage space allocated for point cloud data, albeit with a different storage format. For instance, if a point cloud image has a resolution of M rows by N columns, and the storage space within the chip is limited, the point cloud data storage might only accommodate m rows. This storage space, totaling N columns by m rows by a echoes by b data components by c bits per data component, is utilized cyclically. Once x or y rows of data are stored, an interrupt is triggered, and while the MCU is responding to the interrupt and reading the data, new data is written into the space vacated by the transferred data. This process continues until M rows of point cloud data are acquired. Grayscale image data also has a bit width of c bits. The first frame of single-SPAD row grayscale image occupies *N*c bits. Therefore, the same storage space can accommodate (N*m*a*b*c)*/*(N**c) = (m**a**b) rows of grayscale data. If d rows are fixed for triggering an interrupt to the MCU, the MCU will receive M/d interrupts per frame of SPAD grayscale image. Since 9 frames of SPAD data are synthesized to produce a high-precision grayscale image, this results in 9*M/d interrupts in total.

In this embodiment, by controlling the number of receiving units activated within the open receiver, the same receiving array can be reused for both point cloud data acquisition (activating N receiving units) and grayscale data acquisition (activating fewer than m receiving units, where m is a positive integer less than N). This reduces the cost of implementing grayscale data acquisition in LIDAR devices. Furthermore, since the point cloud data acquisition process inherently includes processing logic for ambient light signals, this processing logic can also be reused for grayscale data acquisition. Additionally, the storage location for point cloud data can be reused for grayscale data storage, further reducing the data processing and storage costs associated with implementing grayscale imaging in LIDAR devices.

The previous embodiments mainly describe the circuit structure of the receiving chip and the grayscale data and point cloud data acquisition processes based on this circuit structure. The following embodiments also provide a method for outputting grayscale data based on this circuit structure.

FIG. 15 is a flowchart of a method for outputting grayscale data according to an embodiment of the present application. This method for outputting grayscale data can be executed by the receiving chip disclosed in the previous embodiments, or by a LIDAR device equipped with the receiving chip disclosed in the previous embodiments.

The receiving chip is equipped with open receivers. Each open receiver includes N receiving units, where the N receiving units have at least two control switches and share a single output channel. N is an integer greater than or equal to 2.

As shown in FIG. 15, method 1500 includes:
Step 1501: During each grayscale data acquisition process, input a working voltage to m receiving units within the open receiver, where m is a positive integer less than N.
Step 1502: Control each open receiver's m receiving units to receive ambient light under the working voltage and output a first sampled signal that is the sum of the m receiving units' outputs after receiving ambient light.
Step 1503: Process the first sampled signal collected by the open receiver during each grayscale data acquisition process to obtain grayscale data.

Optionally, a computer device can stitch multiple grayscale data acquired in multiple grayscale data acquisition processes into one frame of grayscale image, with different receiving units in the open receiver receiving ambient light in different grayscale data acquisition processes.

If m is 1 and each grayscale data acquisition process corresponds to all the open receivers in the receiving array, N pieces of grayscale data acquired by the receiving chip are used for generating a frame of grayscale image.

Optionally, during each grayscale data acquisition process, the m receiving units are located at the same position in different open receivers.

Optionally, in different grayscale scanning modes, the open receivers in the receiving array that receive ambient light during each grayscale data acquisition process are different.

Optionally, in the same grayscale scanning mode, the open receivers in the receiving array that receive ambient light during different grayscale data acquisition processes are different.

The point cloud data acquisition process based on this receiving chip can be implemented as follows: during each point cloud data acquisition process, input a working voltage to the N receiving units in the open receiver; control each open receiver's N receiving units to receive echo signals under the working voltage and output a second sampled signal that is the sum of the N receiving units' outputs after receiving echo signals; and process the second sampled signal output by the open receiver during each point cloud data acquisition process to obtain point cloud data.

Optionally, if all open receivers in the receiving array are activated to receive echo signals during each point cloud data acquisition process, the point cloud data output by the receiving chip is used to generate one frame of point cloud image.
if m is 1, a resolution of a frame of grayscale image spliced based on the grayscale data output by the receiving chip is N times of a corresponding resolution of a frame of point cloud image.

Optionally, when configuring grayscale image imaging based on point cloud data to determine the start row number, end row number, start column number, and end column number, during the grayscale data acquisition process, the open receivers in the receiving chip that receive ambient light are those located in the target reception area of the receiving array. The target reception area is the region within the receiving array spanning from the start row number to the end row number and from the start column number to the end column number.

During grayscale data acquisition, the signal processing module transmits grayscale data to the data center module via a pass-through channel.

During point cloud data acquisition, the signal processing module performs multi-stage processing on the point cloud data and transmits the processed point cloud data and intermediate data generated during processing to the data center module.

In summary, this embodiment provides a method for a LIDAR device to output grayscale data. The receiving array in the receiving chip includes multiple open receivers, enabling the output of high-resolution grayscale images by controlling the switching of the receiving units within the open receiver. This method can reuse the LIDAR's own receiving components, allowing the acquisition of grayscale images without incurring additional costs.

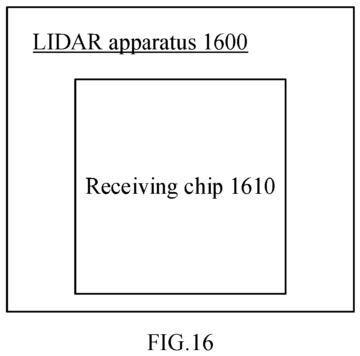

FIG. 16 is a schematic diagram showing the structure of a LIDAR device according to an embodiment of the present application.

As shown in FIG. 16, the LIDAR device 1500 is equipped with a receiving chip 1510, which may include the structure illustrated in FIG. 2 of the previous embodiments. Furthermore, the receiving chip 1510 can execute the method for outputting grayscale data as shown in FIG. 15 during its operation.

This embodiment of the present application also provides a computer device for executing the method for outputting grayscale data as described in the aforementioned embodiments.

This embodiment of the present application further provides a computer-readable storage medium storing computer program code. When executed on a computer, this program code enables the computer to perform the relevant method steps and implement the method for outputting grayscale data as described in the aforementioned embodiments.

This embodiment further provides a computer program product. When executed on a computer, this program product enables the computer to perform the relevant steps and implement the method for outputting grayscale data as described in the aforementioned embodiments.

Through the description of the above embodiments, those skilled in the art can understand that, for the sake of convenience and brevity, the division of various functional modules is merely illustrative. In practical applications, the aforementioned functions can be allocated to different functional modules as needed. In other words, the internal structure of the device can be divided into different functional modules to accomplish all or part of the functions described above.

In the embodiments provided in this application, it should be understood that the disclosed devices and methods can be implemented in other ways. For example, the device embodiments described above are merely illustrative. The division of modules or units is only a logical functional division, and there may be alternative divisions in actual implementation. For instance, multiple units or components may be combined or integrated into another device, or some features may be omitted or not executed. Furthermore, the coupling or communication connections shown or discussed, whether direct or indirect, may be implemented through various interfaces, devices, or units, and may be in electrical, mechanical, or other forms.

The above content represents only specific embodiments of the present application. However, the scope of protection of the present application is not limited thereto. Any person skilled in the art, within the technical scope disclosed by the present application, can readily conceive of variations or substitutions, which should all be encompassed within the scope of protection of the present application. Therefore, the scope of protection of the present application should be determined by the scope of protection defined in the claims.

## Claims

1. A receiving chip, comprising a receiving array, a receiving driving module and a signal processing module, wherein the receiving array comprises a plurality of open receivers, each of the open receivers comprises N receiving units, the N receiving units have at least two control switches, and the N receiving units share a single output channel, where N is an integer greater than or equal to 2;
wherein the receiving driving module is configured to input a working voltage to m receiving units in at least one open receiver in each grayscale data acquisition process, where m is a positive integer less than N;
wherein the m receiving units in the open receiver are configured to receive ambient light under the working voltage and output a first sampled signal accumulated after the m receiving units receive the ambient light; and
wherein the signal processing module is configured to process the first sampled signal acquired by the at least one open receiver in each grayscale data acquisition process to obtain grayscale data.

2. The receiving chip of claim 1, wherein:
a plurality of pieces of grayscale data generated in a plurality of grayscale data acquisition processes are used for splicing to obtain a frame of grayscale image; and
the receiving units receiving the ambient light in the at least one open receiver are different in different grayscale data acquisition processes.

3. The receiving chip of claim 2, wherein:
if m is 1 and each grayscale data acquisition process corresponds to all the open receivers in the receiving array, N pieces of grayscale data acquired by the receiving chip are used for generating a frame of grayscale image.

4. The receiving chip of claim 1, wherein the receiving chip has different grayscale scanning modes, and:
under different grayscale scanning modes, the at least one open receiver receiving the ambient light in the receiving array is different during each grayscale data acquisition process.

5. The receiving chip of claim 4, wherein:
under the same grayscale scanning mode, the at least one open receiver receiving ambient light in the receiving array is different during different grayscale data acquisition processes.

6. The receiving chip of any one of claims 1 to 5, further comprising a point cloud data acquisition function, wherein:
the receiving driving module is further configured to input the working voltage to the N receiving units in the at least one open receiver in each point cloud data acquisition process;
the N receiving units in the open receiver are configured to receive echo signals under the working voltage and output a second sampled signal accumulated after the N receiving units receive the echo signal; and
the signal processing module is further configured to process the second sampled signal output by the at least one open receiver in each point cloud data acquisition process to obtain point cloud data.

7. The receiving chip of claim 6, wherein:
if m is 1, a resolution of a frame of grayscale image spliced based on the grayscale data output by the receiving chip is N times of a corresponding resolution of a frame of point cloud image.

8. The receiving chip of claim 6, further comprising a data center module, wherein:
during a grayscale data acquisition process, the signal processing module is configured to transmit the grayscale data to the data center module via a direct channel; and
during a point cloud data acquisition process, the signal processing module is configured to perform multi-level processing on the point cloud data and transmit the processed point cloud data and intermediate data generated during the processing to the data center module.

9. A method for outputting grayscale data, applied to a receiving chip provided with open receivers, each open receiver including N receiving units having at least two control switches and sharing a single output channel, where N is an integer greater than or equal to 2, the method comprising:
in each grayscale data acquisition process, inputting a working voltage to m receiving units in at least one open receiver, m being a positive integer less than N;
controlling the m receiving units in each open receiver to receive ambient light under the working voltage and outputting a first sampled signal accumulated after the m receiving units receive the ambient light; and
processing the first sampled signal acquired by the open receiver during each grayscale data acquisition process to obtain grayscale data.

10. A LIDAR apparatus comprising the receiving chip of any one of claims 1 to 8.
